# EUROPÄISCHE PATENTSCHRIFT

(11) **EP 3 493 897 B1**
(45) Veröffentlichungstag und Bekanntmachung des Hinweises auf die Patenterteilung: **02.06.2021**
(21) Anmeldenummer: 17777161.5
(22) Anmeldetag: 01.08.2017
(51) Int. Cl.: B01F 7/00, B01F 7/16, B01F 15/00, A47J 43/046, A47J 43/07

(54) **RÜHR- ODER DISPERGIERVORRICHTUNG SOWIE RÜHR- ODER DISPERGIERANORDNUNG**
MIXING OR DISPERSING DEVICE AND MIXING OR DISPERSING ASSEMBLY
DISPOSITIF D'AGITATION OU DE DISPERSION AINSI QU'AGENCEMENT D'AGITATION OU DE DISPERSION

(30) Priorität: 05.08.2016 DE 102016009478
(43) Veröffentlichungstag der Anmeldung: 12.06.2019
(73) Patentinhaber: IKA - Werke GmbH & Co. KG, 79219 Staufen (DE)
(72) Erfinder: JÄGLE, Peter, 79282 Ballrechten-Dottingen (DE); KAUFMANN, Axel, 79395 Neuenburg (DE)
(74) Vertreter: Mertzlufft-Paufler, Cornelius
(86) Internationale Anmeldenummer: PCT/EP2017/000930
(87) Internationale Veröffentlichungsnummer: WO 2018/024371

(56) Entgegenhaltungen:
- EP-A1- 2 939 578
- US-A- 2 278 125
- US-A- 2 284 155
- US-A- 2 757 909
- US-A1- 2006 245 298
- US-B1- 6 616 324

## Beschreibung

Die Erfindung betrifft eine Rühr- oder Dispergiervorrichtung, insbesondere eingerichtet zum Zerkleinern von Tabletten und/oder Medikamentenkapseln und zum Lösen der zerkleinerten Tabletten und/oder Medikamentenkapseln in einer Flüssigkeit, mit einem einen Mischraum aufweisenden Behältnis, mit einem in dem Mischraum um eine Rotationsachse drehbaren Rotor und mit einem mit einem Antrieb koppelbaren oder gekoppelten Übertragungselement zur Übertragung eines Antriebsdrehmoments von dem Antrieb auf den Rotor.

Aus den Druckschriften US 2 284 155 A, US 2 757 909 A, EP 2 939 578 A1, US 2 278 125 A und US 6 616 324 B1 sind Rührvorrichtungen in Form von Mixern vorbekannt, die insbesondere für die Zubereitung von Speisen verwendet werden, wobei die US 2 284 155 A eine Vorrichtung entsprechend dem Oberbegriff des Anspruchs 1 offenbart.

Eine Rühr- oder Dispergiervorrichtung mit einem hermetisch abgeschlossenen Mischraum, einem in diesem Mischraum um eine zentrale Achse antreibbaren Rühr- oder Dispergierwerkzeug mit einem stabförmigen Element zur Kraftübertragung eines Antriebs auf dieses Werkzeug und mit einem außerhalb des Mischraums befindlichen derartigen Antrieb ist aus der Druckschrift US 2006/0245298 A1 vorbekannt.

Ferner betrifft die Erfindung auch eine Rühr- oder Dispergieranordnung mit einer einen Antrieb aufweisenden Antriebseinheit und mit wenigstens einer mit dem Antrieb koppelbaren oder gekoppelten Rühr- oder Dispergiervorrichtung.

Derartige Rühr- oder Dispergiervorrichtungen und Rühr- oder Dispergieranordnungen sind aus der Praxis in unterschiedlichen Ausführungsformen vorbekannt. Sie werden beispielsweise dazu eingesetzt, medizinische Wirkstoffe in einer Flüssigkeit zu lösen. Dazu werden Tabletten und/oder Medikamentenkapseln zusammen mit einer Flüssigkeit in den Mischraum eines Behältnisses dieser Rühr- oder Dispergiervorrichtungen eingebracht. Dann werden die Tabletten und/oder Medikamentenkapseln mithilfe eines Rotors, der Schneiden aufweist, zerkleinert und mit der Flüssigkeit vermischt und gegebenenfalls in der Flüssigkeit gelöst.

Insbesondere bei Medikamentenkapseln kann es dabei jedoch vorkommen, dass diese in oder auf der Flüssigkeit schwimmen und nur schwer oder unter Umständen sogar gar nicht in den Wirkbereich des Rotors gelangen und daher nicht in der gewünschten Weise zerkleinert werden können. Bei Tabletten, die einen schwer löslichen Wirkstoff enthalten, ist es oftmals erforderlich, diese zunächst besonders fein zu zerkleinern, um den Lösevorgang beschleunigen zu können. Bei den bisher aus dem Stand der Technik bekannten Rühr- oder Dispergiervorrichtungen gelingt dies jedoch nicht immer in einer vertretbaren Zeit.

Aufgabe der Erfindung ist es daher, eine Rühr- oder Dispergiervorrichtung sowie eine Rühr- oder Dispergieranordnung der eingangs genannten Art zu schaffen, mit denen sich zu zerkleinerndes Rühr- oder Dispergiergut, insbesondere Tabletten und/oder Medikamentenkapseln, mit großer Zuverlässigkeit zerkleinern und bei Bedarf auch in einer Flüssigkeit lösen lässt.

Diese Aufgabe wird bei einer Rühr- oder Dispergiervorrichtung der eingangs genannten Art mit den Mitteln und Merkmalen des Anspruchs 1 gelöst. Erfindungsgemäß wird eine Rühr- oder Dispergiervorrichtung vorgeschlagen, bei der der Rotor wenigstens einen von einem Boden des Mischraums weg gerichteten, zu der Rotationsachse hin abgewinkelten Schneidvorsprung mit zumindest einer Schneide aufweist. Mit einem derartig ausgebildeten Schneidvorsprung, der beispielsweise von unten nach oben in den Mischraum hineinragen kann, kann zu zerkleinerndes Rühr- oder Dispergiergut, insbesondere Tabletten und/oder Medikamentenkapseln, mit großer Zuverlässigkeit in den Wirkbereich des wenigstens einen um die Rotationsachse rotierenden Schneidvorsprungs gelangen und mithilfe der zumindest einen Schneide zerkleinert werden. Dabei kann die auf das zu zerkleinernde Rühr- oder Dispergiergut einwirkende Schwerkraft ausgenutzt werden. Diese wirkt einer möglicherweise auftretenden Auftriebskraft entgegen und kann das zu zerkleinernde Rühr- oder Dispergiergut in Richtung des wenigstens einen Schneidvorsprungs befördern, wo es auf die zumindest eine Schneide treffen und von dieser zerkleinert werden kann. Die spezielle Ausrichtung des Schneidvorsprungs begünstigt das Zerkleinern des Gutes. Das Risiko, dass das zu zerkleinernde Rühr- oder Dispergiergut auf den Rotor trifft und von diesem aufgrund seiner Bewegung abprallt, ohne zerkleinert zu werden, kann reduziert werden. Dabei kann der wenigstens eine Schneidvorsprung an einem Arm des Rotors angeordnet sein und einen definierten radialen Abstand zu der Rotationsachse des Rotors aufweisen.

Ferner wird bei der Rühr- oder Dispergiervorrichtung erfindungsgemäß vorgeschlagen, dass an einer die Rotationsachse umgebenden, insbesondere quer oder rechtwinklig zum Boden orientierten, Innenumfangswandung des Mischraums wenigstens ein Strömungsbrecher derart vorgesehen, insbesondere angeordnet oder ausgebildet, ist, dass ein Abstand eines ersten, dem Boden zugewandten Endes des Strömungsbrechers zu der Rotationsachse kleiner als ein Abstand eines zweiten, dem ersten Ende abgewandten Endes des Strömungsbrechers zu der Rotationsachse ist. Dieser wenigstens eine Strömungsbrecher bewirkt mit seiner speziellen, sich in seinem Verlauf von seinem ersten zu seinem zweiten Ende hin verjüngenden Geometrie die Ausbildung einer für die Rühr- oder Dispergieraufgabe besonders vorteilhaften Trombe in einer in dem Mischraum befindlichen Flüssigkeit, sobald der Rotor, der auch als Rühr- oder Dispergierwerkzeug bezeichnet werden kann, in Bewegung versetzt wird. Unter Trombe wird im Kontext der Erfindung das durch den angetriebenen Rotor erzeugte Strömungsbild an der Flüssigkeitsoberfläche einer in dem Mischraum befindlichen Flüssigkeit verstanden.

Diese Trombe kann sich aufgrund des wenigstens einen Strömungsbrechers vorteilhafterweise bis hinunter zu dem Rotor erstrecken, sodass auch in der Flüssigkeit schwimmendes Rühr- oder Dispergiergut, insbesondere Tabletten und/oder Medikamentenkapseln, in den Bereich des Schneidvorsprungs gelangen und zerkleinert werden können.

Die spezielle Gestaltung des wenigstens einen Strömungsbrechers an der Innenumfangswandung des Mischraums ermöglicht die Ausbildung der zuvor beschriebenen Trombenform auch bei Rotorantriebskonzepten, nur ein vergleichsweise kleines Antriebsdrehmoment auf den Rotor übertragen werden kann. Daher kann mittels des wenigstens einen Strömungsbrechers ein Energiebedarf der Rühr- oder Dispergiervorrichtung für ein zuverlässiges Zerkleinern und Lösen von Rühr- oder Dispergiergut reduziert werden.

Ein weiteres erfindungswesentliches Merkmal besteht darin, dass zwischen der Innenumfangswandung und dem Boden des Mischraums eine Umlenkfläche ausgebildet ist, die zum Umlenken von zu verarbeitendem Rühr- oder Dispergiergut und Flüssigkeit in Richtung des Rotors und des wenigstens einen Schneidvorsprungs eingerichtet ist. Dabei weist die Umlenkfläche einen zum Boden und zu der Innenumfangswandung des Mischraums schrägen Verlauf auf. Diese Umlenkfläche bewirkt eine Rückströmung von zu zerkleinerndem Rühr- oder Dispergiergut und Flüssigkeit in Richtung des Rotors. Aufgrund der Rotation des Rotors bei Betrieb der Rühr- oder Dispergiervorrichtung wird zu zerkleinerndes Rühr- oder Dispergiergut und/oder Flüssigkeit radial von der Rotationsachse nach außen bis zur Innenumfangswandung des Mischraums transportiert. Dort kann das transportierte Rühr- oder Dispergiergut und/oder die Flüssigkeit oder eine Mischung aus beidem auf die Umlenkfläche prallen und aufgrund ihres schrägen Verlaufs zurück in Richtung des Rotors und des wenigstens einen Schneidvorsprungs gefördert werden, wo das in der Flüssigkeit transportierte Rühr- oder Dispergiergut erneut von dem Schneidvorsprung erfasst und mithilfe der zumindest einen Schneide weiter zerkleinert werden kann. Im günstigsten Fall kann sich dabei eine torusförmige Materialströmung ausbilden, die eine besonders feine Zerkleinerung von Rühr- oder Dispergiergut und eine besonders schnelle Lösung des Rühr- oder Dispergiergutes, insbesondere der Tabletten und/oder Medikamentenkapseln, begünstigt.

Des Weiteren ist erfindungsgemäß vorgesehen, dass das erste Ende des wenigstens einen Strömungsbrechers zu dem Boden des Mischraums und zu einer Kreisbahn, auf der der wenigstens eine Schneidvorsprung bewegbar ist, beabstandet ist. Mit anderen Worten kann das erste Ende des wenigstens einen Strömungsbrechers einen, insbesondere axialen, Abstand zu dem Boden des Mischraums, einen Abstand zu dem wenigstens einen Schneidvorsprung und einen Abstand zu der Kreisbahn, auf der der wenigstens eine Schneidvorsprung bewegbar ist, aufweisen. Somit hat der wenigstens eine Strömungsbrecher sowohl zu dem Boden als auch zu dem wenigstens einen Schneidvorsprung ausreichende Distanz, um zu verhindern, dass sich Rühr- oder Dispergiergut, insbesondere Tabletten und/oder Medikamentenkapseln, zwischen dem wenigstens einen Strömungsbrecher und dem Boden oder dem wenigstens einen Schneidvorsprung verkanten, was den Betrieb der Rühr- oder Dispergiervorrichtung stören oder unterbrechen oder die Rühr- oder Dispergiervorrichtung gar beschädigen könnte.

Unter Kreisbahn im Sinne der vorliegenden Erfindung kann dabei die Bahn verstanden werden, auf der ein Punkt des wenigstens einen Schneidvorsprung bei sich drehendem Rotor um die Rotationsachse umläuft, welcher Punkt einen maximalen Abstand zu der Rotationsachse des Rotors hat.

Ein weiterer Vorteil der erfindungsgemäßen Rühr- oder Dispergiervorrichtung kann darin bestehen, dass bei dieser aufgrund ihrer Konstruktion verhältnismäßig wenig Antriebsenergie auf den Rotor übertragen werden muss, um die gewünschten Rühr- oder Dispergierergebnisse erzielen zu können. Insbesondere die spezielle Gestaltung des wenigstens einen Strömungsbrechers und seine Anordnung an der Innenumfangswandung des Mischraums spielen hierfür eine besondere Rolle. Sie erlauben nämlich die Ausbildung einer energetisch besonders günstigen Trombenströmung, die eine zügige Zerkleinerung und gegebenenfalls auch Lösung des Rühr- oder Dispergiergutes in der Flüssigkeit begünstigen kann. Dies selbst dann, wenn nur ein vergleichsweise schwacher Antrieb zur Verfügung steht oder eine Begrenzung des zulässigen Drehmoments zu berücksichtigen ist.

Vorteilhaft kann es ferner sein, wenn der Rotor zwei, drei oder vier oder mehr Schneidvorsprünge der zuvor beschriebenen Art aufweist. Die Schneidvorsprünge können dabei jeweils an einem eigenen Arm des Rotors angeordnet und, gegebenenfalls unterschiedlich, zur Rotationsachse des Rotors beabstandet sein.

Wenn die Rühr- oder Dispergiervorrichtung zwei, drei oder vier oder mehr, vorzugsweise gleichmäßig um die Rotationsachse verteilt angeordnete, Strömungsbrecher der zuvor beschriebenen Art aufweist, kann sich eine besonders stabile Trombe ausbilden.

Zur Ausbildung der zuvor beschriebenen Trombe kann es ferner vorteilhaft sein, wenn der wenigstens eine Strömungsbrecher ein in den Mischraum ragender, in Richtung der Rotationsachse, insbesondere parallel zu dieser, verlaufender Steg ist. Dabei kann der Steg einen rechteckigen oder zumindest bereichsweise runden Querschnitt aufweisen. Wie bereits zuvor angedeutet wurde, hat erfindungsgemäss der wenigstens eine Strömungsbrecher eine sich vo dem ersten Ende zu dem zweiten Ende hin, insbesondere konisch, verjüngende Geometrie haben.

Dabei kann der wenigstens eine sich konisch verjüngende Strömungsbrecher die Ausbildung der Trombe in vorbestimmter Weise begrenzen. Ohne Strömungsbrecher würde sich eine maximal große Trombe ergeben, was dazu führen würde, dass sich das Rühr- oder Dispergiergut, also zu zerkleinernde Partikel, aufgrund der Zentrifugalkraft an der Innenumfangswandung des Mischraums anlegen und dort herumkreisen würde, ohne jedoch in den Wirkbereich des wenigstens einen Schneidvorsprungs zu gelangen. Würde der wenigstens eine Strömungsbrecher mit einem von dem konischen Verlauf abweichenden geraden Verlauf vorgesehen, würde sich eine zu kleine Trombe bilden. Die dann unter Umständen nicht mehr bis in den Wirkbereich des wenigstens einen Schneidvorsprungs reichen würde. Dies könnte dazu führen, dass die zu zerkleinernden Partikel nicht mehr zerkleinert werden könnten, insbesondere wenn diese eine geringere Dichte als die Flüssigkeit in dem Mischraum haben und an der Oberfläche der Trombe schwimmen.

Wenn das erste Ende des wenigstens einen Strömungsbrechers, insbesondere entlang eines Radius, gebogen ist, kann eine sich ausbildende Strömung auch mithilfe des gebogenen ersten Endes des wenigstens einen Strömungsbrechers in Richtung des Rotor umgelenkt werden. So kann die Funktion der Umlenkfläche im Übergangsbereich zwischen dem Boden und der Innenumfangswandung des Mischraums unterstützt und ein noch besseres Rühr- oder Dispergierergebnis erzielt werden.

Der wenigstens eine Strömungsbrecher kann bei einer Ausführungsform der Erfindung ein separates Teil sein. Besonders vorteilhaft ist es aber, wenn der wenigstens eine Strömungsbrecher mit der Innenumfangswandung des Mischraums eine stofflich homogene, monolithische Einheit bildet. So kann der wenigstens eine Strömungsbrecher einstückig mit dem Behältnis verbunden und unverliebar an dem Behältnis angeordnet sein.

Der wenigstens eine Schneidvorsprung kann in einem beliebigen Winkel zwischen 0 Grad und 90 Grad zu der Rotationsachse ausgerichtet sein und dabei von dem Boden des Mischraums nach oben weisen. Vorzugsweise kann der wenigstens eine Schneidvorsprung in einem Winkel von fünf Grad zu der Rotationsachse oder auch in einem Winkel von 85 Grad zu einer rechtwinklig zu der Rotationsachse orientierten Querschnittsebene und/oder zu dem Boden des Mischraums des Behältnisses angeordnet sein. Wenn der wenigstens eine Schneidvorsprung in einem Winkel fünf Grad zu der Rotationsachse und in einem Winkel von 85 Grad zu der zuvor definierten Querschnittsebene oder zu dem Boden des Mischraums des Behältnisses angeordnet oder ausgerichtet ist, kann dies Vorteile bei der Herstellung des Rotors haben.

Wenn der wenigstens eine Schneidvorsprung durch Abbiegen eines freien Ende eines Arms des Rotors hergestellt wird, kann es aus biegetechnischen Gründen vorteilhaft sein, den wenigstens einen Schneidvorsprung in dem besagten Winkel von 85 Grad zu einem Boden des Gefäßes oder einer rechtwinklig zu der Rotationsachse orientierten Querschnittsebene oder in einem Winkel von fünf Grad zu der Rotationsachse auszurichten.

So kann das zu zerkleinernde Rühr- oder Dispergiergut aufgrund der sich innerhalb des Mischraums ausbildenden, insbesondere walzenartigen, Strömung von oben auf den wenigstens einen Schneidvorsprung transportiert und von der zumindest einen Schneide zuverlässig erfasst und zerkleinert werden. Die Wirkung der Schneide auf das Rühr- oder Dispergiergut kann besonders gut sein, wenn die zumindest eine Schneide quer oder rechtwinklig zu der Rotationsachse ausgerichtet ist.

Um die gewünschten Strömungsverhältnisse innerhalb des Mischraums zu erzeugen, kann es vorteilhaft sein, wenn die Umlenkfläche zwischen der Innenumfangswandung und dem Boden des Mischraums, die durch die Umlenkfläche miteinander verbunden sind, einen gebogenen Verlauf aufweist. Dabei kann die Umlenkfläche entlang eines Radius über einen bestimmten Winkelbereich, beispielsweise von 90 Grad, gebogen sein. Vorteilhaft kann es außerdem sein, wenn die Umlenkfläche einen um die Rotationsachse geschlossenen, unterbrechungsfreien Ring bildet. Dieser Ring kann dann einen Übergangsbereich zwischen dem Boden und der Innenumfangswandung des Mischraums ausfüllen und zu der Ausbildung einer besonders stabilen und gleichmäßigen Strömung, insbesondere einer torusförmigen Strömung, beitragen.

Um eine Blockierung des Rotors innerhalb des Mischraums aufgrund von zu verarbeitenden Partikeln effektiv vermeiden zu können, kann es vorteilhaft sein, wenn ein minimaler axialer Abstand des wenigstens einen Strömungsbrechers zu dem Boden des Mischraums, ein minimaler Abstand des wenigstens einen Strömungsbrechers zu dem wenigstens einen Schneidvorsprung und/oder ein minimaler Abstand des wenigstens einen Strömungsbrechers zu der Kreisbahn des wenigstens einen Schneidvorsprungs wenigstens so groß wie eine größte Abmessung mit der Rühr- oder Dispergiervorrichtung zu verarbeitender Partikel, insbesondere von Tabletten und/oder Medikamentenkapseln, ist.

Also kann ein minimaler axialer Abstand des wenigstens einen Strömungsbrechers zu dem Boden des Mischraums, ein minimaler Abstand des wenigstens einen Strömungsbrechers zu dem wenigstens einen Schneidvorsprung und auch ein minimaler Abstand des wenigstens einen Strömungsbrechers zu der Kreisbahn des wenigstens einen Schneidvorsprungs auf eine größte Abmessung mit der Rühr- oder Dispergiervorrichtung zu verarbeitender Partikel, insbesondere von Tabletten und/oder Medikamentenkapseln, abgestimmt sein. Das heißt, dass dann die zuvor definierten Abstände wenigstens so groß wie diese größte Abmessung sind.

Gute Ergebnisse lassen sich erzielen, wenn ein minimaler axialer Abstand des wenigstens einen Strömungsbrechers zu dem Boden des Mischraums wenigstens einem Fünftel, einem Viertel, einem Drittel, der Hälfte, zwei Dritteln, drei Vierteln, neun Zehnteln eines Radius des Rotors oder wenigstens der Länge des Radius des Rotors entspricht. Es ist aber auch möglich, dass der minimale axiale Abstand des wenigstens einen Strömungsbrechers zu dem Boden des Mischraums größer als der Radius und kleiner als der Durchmesser des Rotors ist. So kann der Abstand also eine Länge haben, die zwischen der Länge des Radius und der Länge des Durchmessers des Rotors liegt.

Vorteilhaft kann es ferner sein, wenn ein minimaler Abstand des wenigstens einen Strömungsbrechers zu dem wenigstens einen Schneidvorsprung wenigstens einem Fünftel, einem Viertel, einem Drittel, der Hälfte, zwei Dritteln, drei Vierteln, neun Zehnteln des Radius des Rotors oder wenigstens der Länge des Radius des Rotors entspricht. Es ist aber auch möglich, dass der minimale Abstand des wenigstens einen Strömungsbrechers zu dem wenigstens einen Schneidvorsprung größer als der Radius und kleiner als der Durchmesser des Rotors ist. So kann dieser Abstand also eine Länge haben, die zwischen der Länge des Radius und der Länge des Durchmessers des Rotors liegt.

Günstig kann es außerdem sein, wenn ein minimaler Abstand des wenigstens einen Strömungsbrechers zu der Kreisbahn des wenigstens einen Schneidvorsprungs wenigstens einem Fünftel, einem Viertel, einem Drittel, der Hälfte, zwei Dritteln, drei Vierteln, neun Zehnteln des Radius des Rotors oder wenigstens der Länge des Radius des Rotors entspricht. Es ist aber auch möglich, dass der minimale Abstand des wenigstens einen Strömungsbrechers zu der Kreisbahn des wenigstens einen Schneidvorsprungs größer als der Radius und kleiner als der Durchmesser des Rotors ist. So kann dieser Abstand also eine Länge haben, die zwischen der Länge des Radius und der Länge des Durchmessers des Rotors liegt.

Zur einfacheren, bei Bedarf auch automatisierten Handhabung der erfindungsgemäßen Rühr- oder Dispergiervorrichtung kann es vorteilhaft sein, wenn das Behältnis eine dem Boden des Mischraums gegenüberliegende Verschlusswandung aufweist, an deren dem Mischraum abgewandten Außenseite eine Schnittstelle für eine Handhabungseinheit vorgesehen ist. So kann die erfindungsgemäße Rühr- oder Dispergiervorrichtung mittels einer auf die Schnittstelle abgestimmten Handhabungseinheit gehandhabt werden.

Außerdem kann eine, beispielsweise die bereits zuvor erwähnte, dem Boden des Mischraums gegenüberliegende Verschlusswandung eine Einfüllöffnung aufweisen. Durch diese können bei Bedarf Rühr- oder Dispergiergut oder auch Flüssigkeit oder sonstige Beistoffe dem Mischraum zugeführt. Der Einfüllöffnung kann vorteilhafterweise ein Deckel zugeordnet sein, mit dem die Einfüllöffnung verschlossen werden kann.

In diesem Zusammenhang kann es vorteilhaft sein, wenn die Einfüllöffnung von einem Gewindestutzen umgeben ist, der ein Gewinde aufweist. Wenn dann der Deckel mit einem dazu passend ausgebildeten Gewinde versehen ist, kann die Einfüllöffnung durch ein Aufschrauben des Deckels auf den Stutzen oder Gewindestutzen besonders zuverlässig verschlossen werden.

Bei einer weiteren Ausführungsform der Erfindung kann vorgesehen sein, dass das Behältnis an seiner in Gebrauchsstellung einem Antrieb zugewandten Unterseite wenigstens einen Standfuß aufweist. So lässt sich die Rühr- oder Dispergiervorrichtung bei Bedarf auf einer Oberfläche abstellen, ohne zu leicht umzukippen.

Ferner kann das Behältnis an seiner einem Antrieb in Gebrauchsstellung zugewandten Unterseite eine Bajonett-Kupplung aufweisen. So ist es möglich, die erfindungsgemäße Rühr- oder Dispergiervorrichtung zuverlässig mit einer Antriebseinheit zu verbinden, die über eine entsprechende Gegenkupplung verfügt.

Dabei kann es zweckmäßig sein, wenn eine, beispielsweise die zuvor bereits erwähnte Schnittstelle für eine Handhabungseinheit an einer dem Boden abgewandten Außenseite einer, beispielsweise der bereits zuvor erwähnten Verschlusswandung des Behältnis in einer definierten Ausrichtung zu dem wenigstens einen Standfuß und/oder der Bajonettkupplung angeordnet ist.

So ist es möglich, dass die Rühr- oder Dispergiervorrichtung mithilfe einer Handhabungseinheit automatisiert in einer bestimmten und wohl definierten Orientierung an eine Bearbeitungsstation oder ein Antriebseinheit zur Kupplung mit der Bajonettkupplung übergeben werden kann. Die Relativposition zwischen der Schnittstelle und dem wenigstens einen Standfuß und/oder der Bajonettkupplung kann dann als Kodierung fungieren, mit deren Hilfe die Rühr- oder Dispergiervorrichtung bei Ergreifen durch eine Handhabungseinheit im Rahmen einer automatisierten Handhabung und Übergabe der erfindungsgemäßen Rühr- oder Dispergiervorrichtung in einer für eine Übergabe optimierten Position ausgerichtet ist.

Ein Antriebskonzept der erfindungsgemäßen Rühr- oder Dispergiervorrichtung kann vorsehen, dass das Übertragungselement ein von einer Membran, die zumindest einen Teil einer Innenwandung des Behältnisses bildet, gehaltenes, stabförmiges Element ist. Dieses kann mittels eines Antriebs in eine taumelnde Bewegung versetzt werden, sodass ein in den Mischraum ragendes Stabende des stabförmigen Elements eine taumelnde Bewegung ausführt. Dabei kann das stabförmige Element, insbesondere mit seinem Stabende, in eine Ausnehmung des Rotors eingreifen, um den Rotor durch die eigene Taumelbewegung in eine Rotationsbewegung zu versetzen.

Bei einem anderen erfindungsgemäßen Antriebskonzept ist vorgesehen, dass das Übertragungselement eine durch eine Drehdurchführung in den Mischraum geführte, mittels eines Antriebs antreibbare Antriebwelle ist. Mit dieser ist der Rotor drehfest verbunden und kann bei einer Rotation der Antriebswelle ebenfalls in Rotation versetzt werden.

Für das Zerkleinern und/oder Verarbeiten von Tabletten und/oder Medikamentenkapseln kann es besonders vorteilhaft sein, wenn das erste Ende des wenigstens einen Strömungsbrechers einen axialen Abstand zu der Kreisbahn aufweist, auf der der wenigstens eine Schneidvorsprung bei Betrieb der Rühr- oder Dispergiervorrichtung umläuft. Auf diese Weise kann zwischen dem ersten Ende des wenigstens einen Strömungsbrechers und der Kreisbahn, auf der der wenigstens eine Schneidvorsprung bei Betrieb der Rühr- oder Dispergiervorrichtung umläuft, ein Freiraum geschaffen werden, der groß genug ist, um ein Verklemmen einer Tablette und/oder Medikamentenkapsel zwischen dem Rotor und dem ersten Ende des wenigstens einen Strömungsbrechers zu vermeiden. Zudem kann dieser axiale Abstand zwischen dem ersten Ende des wenigstens einen Strömungsbrechers und der Kreisbahn die Ausbildung einer Rückströmung eines Gemischs aus Flüssigkeit und darin befindlichen Feststoffen, insbesondere Teilen von Medikamentenkapseln und/oder Tabletten, in einen von der Kreisbahn definierten Schneidbereich des Rotors begünstigen. Insgesamt kann so ein gründliches und zuverlässiges Zerkleinern und Lösen von Tabletten und/oder Medikamentenkapseln in einer Flüssigkeit erfolgen.

Ferner ist es möglich, dass der Rotor, insbesondere axial, also in Bezug auf die Rotationsachse des Rotors, zwischen dem Boden des Mischraums und dem ersten Ende des wenigstens einen Strömungsbrechers angeordnet ist. Diese Anordnung des Rotors insbesondere relativ zu dem ersten Ende des wenigstens einen Strömungsbrechers kann das Risiko verringern, dass sich eine Medikamentenkapsel und/oder eine Tablette zwischen dem Rotor mit seinem wenigstens einen Schneidvorsprung und dem wenigstens einen Strömungsbrecher verklemmt.

Es in diesem Zusammenhang vorgesehen, dass das erste Ende des wenigstens einen Strömungsbrechers oberhalb der Kreisbahn angeordnet ist, auf der der wenigstens eine Schneidvorsprung des Rotors bei Betrieb der Rühr- oder Dispergiervorrichtung umläuft. Diese Anordnung ist vor allem bei aufrechtstehend verwendeten Behältnissen sinnvoll und kann ein Verklemmen von Medikamentenkapseln und/oder Tabletten zwischen dem Rotor und dem wenigstens einen Strömungsbrecher verhindern. Dies vor allem im Zusammenhang mit einem entsprechenden axialen Abstand des ersten Endes des wenigstens einen Strömungsbrechers zu der Kreisbahn. Der axiale Abstand zwischen dem ersten Ende des wenigstens einen Strömungsbrechers und der Kreisbahn des wenigstens einen Schneidvorsprungs und/oder der wenigstens einen Schneide des Rotors kann dabei auf eine größte Abmessung von Partikeln, insbesondere von Tabletten und/oder Medikamentenkapseln, die mit der Rühr- oder Dispergiervorrichtung verarbeitet werden sollen, abgestimmt sein. Insbesondere kann der axiale Abstand zwischen dem ersten Ende des wenigstens einen Strömungsbrechers und der Kreisbahn des wenigstens einen Schneidvorsprungs und/oder der wenigstens einen Schneide größer als eine solche größte Abmessung zu verarbeitender Partikel sein.

Bei einer Ausführungsform der Rühr- oder Dispergiervorrichtung kann ein, insbesondere - radialer, Abstand zwischen der Umlenkfläche und der Rotationsachse des Rotors größer als ein, insbesondere radialer, Abstand zwischen dem ersten Ende und der Rotationsachse des Rotors sein. Auf diese Weise kann die Umlenkfläche im Vergleich zu dem ersten Ende des wenigstens einen Strömungsbrechers zurückversetzt angeordnet sein. Diese Anordnung der Umlenkfläche relativ zu dem ersten Ende des wenigstens einen Strömungsbrechers kann die Ausprägung einer stabilen und vor allem zielgerichteten Rückströmung der Flüssigkeit und der darin befindlichen Feststoffe zurück in den Wirkbereich des Rotors begünstigen. Insgesamt lassen sich so Tabletten und/oder Medikamentenkapseln nicht nur schneller zerkleinern, sondern auch innerhalb kürzerer Zeit in einer Flüssigkeit auflösen.

Die weiter oben genannte Aufgabe wird auch durch eine Rühr- oder Dispergieranordnung mit den Mitteln und Merkmalen des auf diese gerichteten unabhängigen Anspruchs gelöst. Insbesondere wird erfindungsgemäß eine Rühr- oder Dispergieranordnung mit einer einen Antrieb aufweisenden Antriebseinheit und mit wenigstens einer mit dem Antrieb koppelbaren oder gekoppelten erfindungsgemäßen Rühr- oder Dispergiervorrichtung vorgeschlagen.

Nachstehend ist ein Ausführungsbeispiel der Erfindung anhand der Zeichnung näher beschrieben. Es zeigen in zum Teil schematisierter Darstellung:
- Fig. 1: eine perspektivische Ansicht einer erfindungsgemäßen Rühr- oder Dispergiervorrichtung,
- Fig. 2: eine quergeschnittene, perspektivische Ansicht eines Sockels der in Figur 1 dargestellten Rühr- oder Dispergiervorrichtung, wobei der Querschnitt unterhalb der ersten Enden innerhalb des Mischraums angeordneter Strömungsbrecher liegt,
- Fig. 3: eine Seitenansicht der in den Figuren 1 und 2 dargestellten Rühr- oder Dispergiervorrichtung,
- Fig. 4: eine entlang der in Figur 3 dargestellten Linie IV-IV geschnittene Draufsicht auf die in den Figuren 1 bis 3 dargestellte Rühr- oder Dispergiervorrichtung,
- Fig. 5: eine entlang der in Figur 4 dargestellten Linie V-V geschnittene Seitenansicht der in den Figuren 1 bis 4 dargestellten Rühr- oder Dispergiervorrichtung,
- Fig. 6: eine weitere Draufsicht auf die in den Figuren 1 bis 5 dargestellte Rühr- oder Dispergiervorrichtung, wobei im Mischraum der Rühr- oder Dispergiervorrichtung ein sternförmiger Rotor als Rühr- oder Dispergierwerkzeug mit drei Armen zu erkennen ist, an deren freien Enden jeweils ein rechtwinklig aus der Zeichenebene ragender Schneidvorsprung ausgebildet ist, sowie
- Fig. 7: eine entlang der in Figur 6 dargestellten Linie VII-VII geschnittene Seitenansicht der in den vorherigen Figuren dargestellten Rühr- oder Dispergiervorrichtung, wobei drei von insgesamt vier in den Mischraum ragende Strömungsbrecher zu erkennen sind, wobei sämtliche Strömungsbrecher beabstandet zu einem Boden des Mischraums an einer Innenumfangswandung des Mischraums angeordnet sind und eine sich in ihrem Verlauf von unten nach oben verjüngende Geometrie aufweisen, sodass sie an ihrem ersten unteren Ende weiter in den Mischraum hineinragen als an ihrem zweiten oberen Ende.

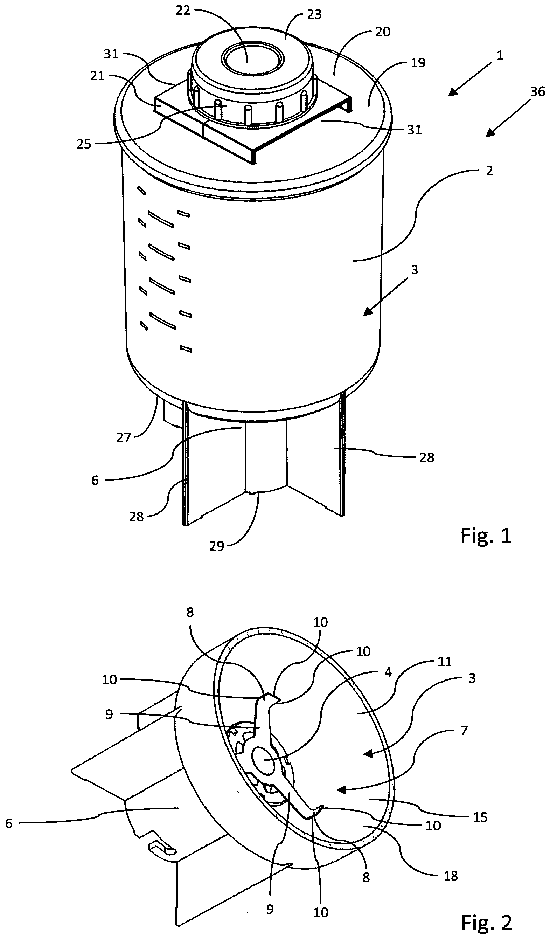

Die Figuren 1 bis 7 zeigen unterschiedliche Ansichten einer insgesamt mit 1 bezeichneten Rühr- oder Dispergiervorrichtung. Diese ist dazu eingerichtet, Tabletten und/oder Medikamentenkapseln effizient zu zerkleinern und danach in einer Flüssigkeit zu lösen.

Die Rühr- oder Dispergiervorrichtung 1 weist ein Behältnis 2 mit einem darin befindlichen Mischraum 3 auf. In dem Mischraum 3 ist ein um eine Rotationsachse R antreibbarer Rotor 4 angeordnet. Dieser Rotor 4 kann allgemein als Rühr- oder Dispergierwerkzeug bezeichnet werden und dient dazu, in den Mischraum 3 eingefülltes Rühr- oder Dispergiergut zu zerkleinern und mit einer ebenfalls in den Mischraum 3 eingefüllten Flüssigkeit zu vermischen oder sogar darin zu lösen.

Die Rühr- oder Dispergiervorrichtung 1 weist ferner einen mit einem in den Figuren nur stark schematisiert dargestellten Antrieb 5 koppelbares und in Gebrauchsstellung gekoppeltes Übertragungselement 6 auf. Das Übertragungselement 6 dient zur Übertragung eines Antriebsdrehmoments von dem Antrieb 5 auf den Rotor 4.

Wie insbesondere die Figuren 2, 4, 5, 6 und 7 verdeutlichen, weist der Rotor 4 insgesamt drei von einem Boden 7 des Mischraumes 3 weg gerichtete, zu der Rotationsachse R hin abgewinkelte Schneidvorsprünge 8 auf. Jeder der drei Schneidvorsprünge 8 ist dabei an einem freien Ende eines von insgesamt drei Armen 9 des sternförmigen Rotors 4 angeordnet. Jeder der drei Schneidvorsprünge 8 weist an jeder seiner drei freien Außenkanten jeweils eine Schneide 10 auf, mit denen in den Mischraum 3 eingefülltes Rühr- oder Dispergiergut, insbesondere Tabletten und/oder Medikamentenkapseln, zerkleinert werden können, sobald der Rotor 4 angetrieben wird.

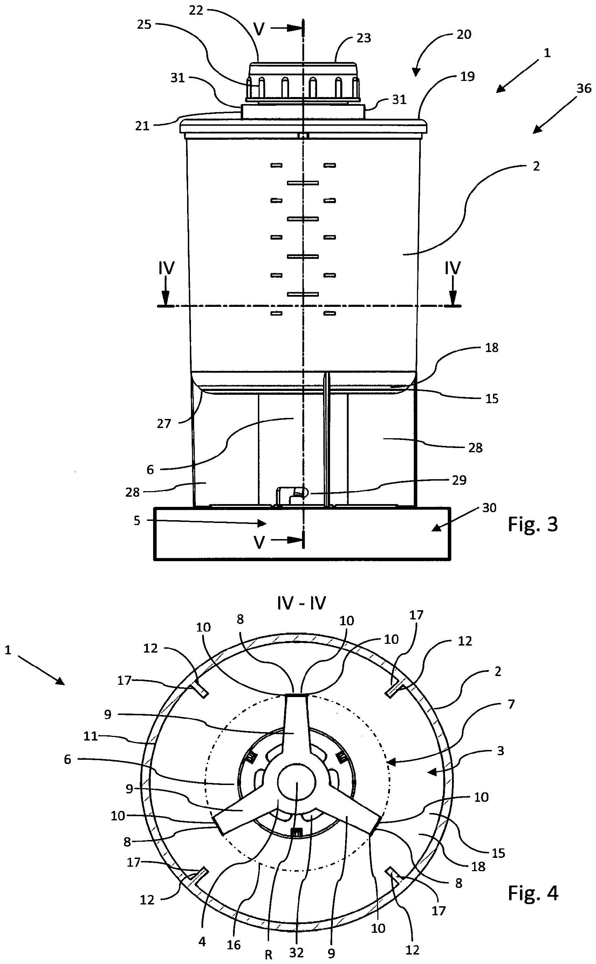

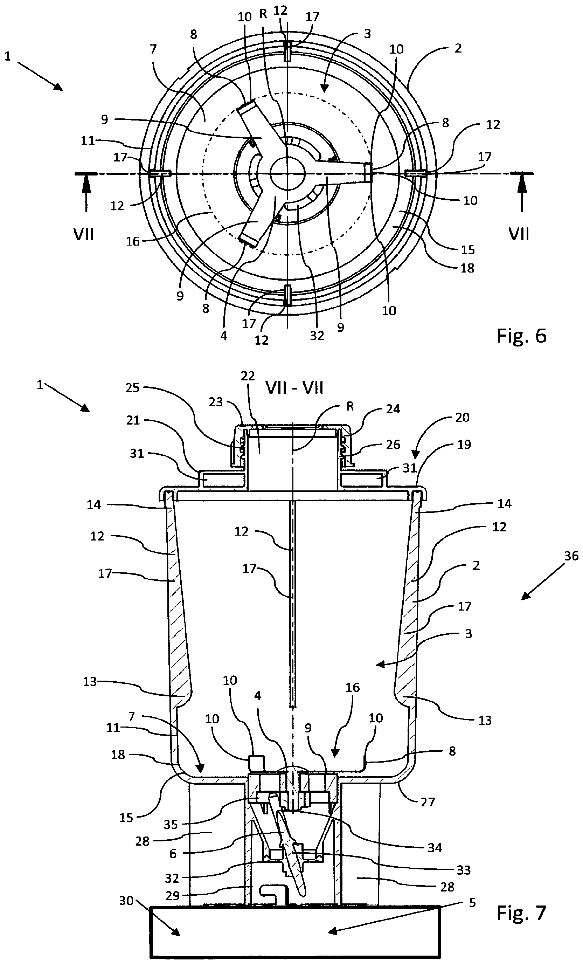

An einer quer bzw. rechtwinklig zum Boden 7 orientierten Innenumfangswandung 11 des Mischraums 3 sind gemäß den Figuren 4 und 6 insgesamt vier, gleichmäßig um die Rotationsachse R verteilt angeordnete Strömungsbrecher 12 vorgesehen. Diese Strömungsbrecher 12 sind dabei derart ausgebildet, dass Abstände von ersten, dem Boden 7 des Mischraums 3 zugewandten Enden 13 der Strömungsbrecher 12 zu der Rotationsachse R kleiner als Abstände von zweiten, den ersten Enden 13 abgewandten Ende 14 der Strömungsbrecher 12 zu der Rotationsachse R sind. Diese spezielle Ausgestaltung der Strömungsbrecher 12 dient dazu, bei Gebrauch der Rühr- oder Dispergiervorrichtung 1 eine energetisch optimierte Strömung in Form einer bis zum Rotor 4 reichenden Trombe zu erzeugen.

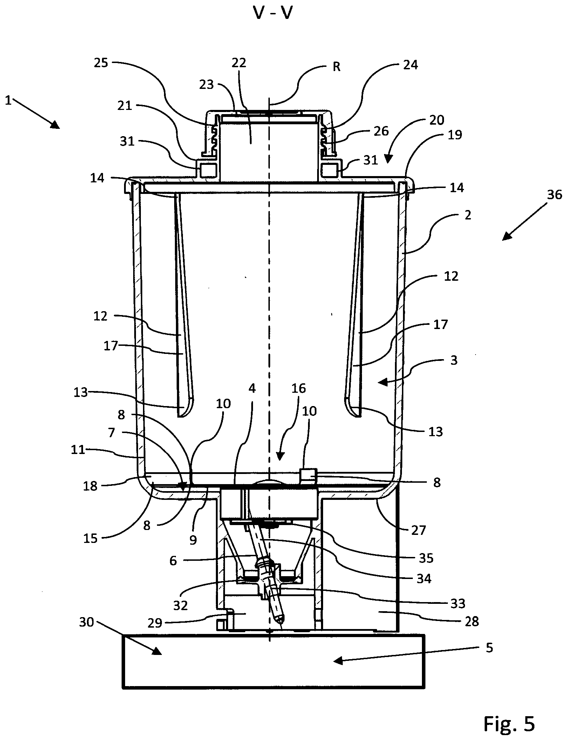

Zwischen der Innenumfangswandung 11 und dem Boden 7 des Mischraums 3 ist ferner eine Umlenkfläche 15 zum Umlenken von zu verarbeitendem Rühr- oder Dispergiergut und/oder Flüssigkeit in Richtung des Rotors 4 und der insgesamt drei Schneidvorsprünge 8 ausgebildet. Diese Umlenkfläche 15 ist besonders gut in den Schnittdarstellungen der Rühr- oder Dispergiervorrichtung 1 gemäß den Figuren 5 und 7 zu erkennen.

Die Umlenkfläche 15 hat dabei einen sowohl zum Boden 7 als auch zur Innenumfangswandung 11 schrägen Verlauf, sodass eine auf die Umlenkfläche 15 auftreffende Materialströmung bestehend aus Rühr- oder Dispergiergut und Flüssigkeit in gewünschter Weise umgelenkt und zurück in den Wirkbereich des Rotors 4 und seiner Schneidvorsprünge 8 transportiert wird. Die Materialströmung in Richtung der Umlenkfläche 15 wird durch den sich drehenden Rotor 4 hervorgerufen.

Insbesondere die Schnittdarstellungen der Rühr- oder Dispergiervorrichtung 1 verdeutlichen ferner, dass das erste, untere Ende 13 eines jeden der vier Strömungsbrecher 12 einen axialen Abstand zu dem Boden 7 des Mischraums 3, einen axialen Abstand zu dem Rotor 4 und vor allem zu seinen Schneidvorsprüngen 8 und auch einen Abstand zu einer Kreisbahn 16, auf der die insgesamt drei Schneidvorsprünge 8 bewegt werden, wenn der Rotor 4 in Bewegung gesetzt wird, aufweist.

Die insgesamt vier in den Mischraum 3 hineinragenden Strömungsbrecher 12 sind als in Richtung der Rotationsachse R an der Innenumfangswandung 11 des Mischraums 3 verlaufende Stege 17 ausgebildet. Die Stege 17 haben dabei zumindest abschnittsweise rechteckige Querschnitte. Wie bereits zuvor ausgeführt und insbesondere anhand der Figuren 5 und 6 zu erkennen ist, hat jeder der vier Strömungsbrecher 12 eine sich von dem ersten Ende 13 zu dem zweiten Ende 14 hin verjüngende Geometrie. Mit anderen Worten bedeutet dies, dass sich ein Abstand einer der Rotationsachsen R zugewandten Oberfläche oder Seite eines jeden Strömungsbrechers 12 im Verlauf des jeweiligen Strömungsbrechers 12 vom ersten Ende 13 bis hin zum zweiten Ende 14 zu der dem jeweiligen Strömungsbrecher 12 umgebenden Innenumfangswandung 11 reduziert. So weisen die vier Strömungsbrecher 12 im Bereich ihrer unteren ersten Enden 13 einen geringeren Abstand zueinander auf als an ihren oberen zweiten Enden 14.

Die Figuren zeigen deutlich, dass die ersten Enden 13 der Strömungsbrecher 12 entlang eines Radius gebogen sind. Anhand der geschnittenen Seitenansicht der erfindungsgemäßen Rühr- oder Dispergiervorrichtung 1 gemäß Figur 7 ist ferner zu erkennen, dass die Strömungsbrecher 12 mit der Innenumfangswandung 11 des Mischraums 3 einstückig verbunden sind. Dies bedeutet, dass die Strömungsbrecher 12 mit der Innenumfangswandung 11 des Mischraums 3 eine stofflich homogene, monolithische Einheit bilden.

Gemäß den Figuren 2, 4, 5, 6 und 7 sind die Schneidvorsprünge 8 in einem Winkel von 90° zu dem Boden 7 des Mischraums 3 und in einem Winkel von 90° zu einer rechtwinklig zu der Rotationsachse R orientierten Querschnittsebene und in einem Winkel von 0° zu der Rotationsachse R und damit parallel zu der Rotationsachse R des Rotors 4 ausgerichtet. Zumindest die oberen Schneiden 10 der Schneidvorsprünge 8 sind dabei rechtwinklig zu der Rotationsachse R ausgerichtet und in einer gemeinsamen Schneidenebene angeordnet. Die übrigen seitlichen Schneiden 10 der Schneidvorsprünge 8 stehen in einem rechten Winkel zu dem Boden 7 des Mischraums 3 und sind daher zumindest abschnittsweise parallel zu der Rotationsachse R ausgerichtet.

Die Umlenkfläche 15 hat zwischen der Innenumfangswandung 11 und dem Boden 7 des Mischraums 3, die sie beide verbindet, einen entlang eines Radius über einen Winkelbereich von 90° gebogenen Verlauf und bildet einen um die Rotationsachse R geschlossenen, unterbrechungsfreien Ring 18.

Ein minimaler axialer Abstand der Strömungsbrecher 12 zu dem Boden 7 des Mischraums 3, ein minimaler Abstand der Strömungsbrecher 12 zu den Schneidvorsprüngen 8 und auch ein minimaler Abstand der Strömungsbrecher 12 zu der Kreisbahn 16 der Schneiden 10 ist auf eine größte Abmessung mit der Rühr- oder Dispergiervorrichtung 1 zu verarbeitender Partikel, insbesondere von Tabletten und/oder Medikamentenkapseln, abgestimmt. Das heißt, dass die zuvor definierten Abstände wenigstens so groß wie diese größte Abmessung sind.

Im in den Figuren dargestellten Ausführungsbeispiel der erfindungsgemäßen Rühr- oder Dispergiervorrichtung 1 beträgt der minimale Abstand der Strömungsbrecher 12 zu dem Boden 7 des Mischraums 3 etwa 95% des Radius des Rotors 4. Unter Radius des Rotors 4 wird hier der Abstand der von der Rotationsachse R am weitesten entfernten Punkte des Rotors 4 oder der Schneidvorsprünge 8 zu der Rotationsachse R verstanden.

Bei einem in den Figuren nicht dargestellten Ausführungsbeispiel der Rühr- oder Dispergiervorrichtung 1 kann der minimale Abstand der Strömungsbrecher 12 auch größer als der Radius des Rotors sein. So kann der Abstand größer als der Radius, jedoch kleiner als der Durchmesser des Rotors 4 gewählt werden.

Der minimale Abstand der Strömungsbrecher 12 zu den Schneidvorsprüngen 8 und den oberen Schneiden 10, wie er in der rechten Hälfte von Figur 7 zu erkennen ist, beträgt etwa 90% des Radius des Rotors 4. Dieser minimale Abstand entspricht dabei auch dem Abstand der Strömungsbrecher 12 zu der Kreisbahn 16, auf der die Schneiden 10 und die Schneidvorsprünge 8 bei angetriebenem Rotor 4 um die Rotationsachse R bewegt werden.

Der minimale Abstand der Strömungsbrecher 12 zu den Schneidvorsprüngen 8 und den oberen Schneiden 10 kann aber auch größer als der Radius des Rotors 4 gewählt werden. Es ist möglich, dass der Abstand der Strömungsbrecher 12 zu den Schneidvorsprüngen 8 und den oberen Schneiden 10 größer als der Radius, jedoch kleiner als der Durchmesser des Rotors 4 ist.

Das Behältnis 2 weist eine dem Boden 7 des Mischraums 3 gegenüberliegend angeordnete Verschlusswandung 19 auf. An einer dem Mischraum 3 abgewandten Außenseite 20 der Verschlusswandung 19 ist eine Schnittstelle 21 vorgesehen, an der eine in den Figuren nicht dargestellte Handhabungseinheit die Rühr- oder Dispergiervorrichtung 1 ergreifen kann.

In der Verschlusswandung 19 ist zudem eine Einfüllöffnung 22 in den Mischraum 3 ausgebildet, durch die Rühr- oder Dispergiergut, weitere Stoffe oder auch Flüssigkeiten in den Mischraum 3 eingebracht werden können. Die Einfüllöffnung 22 kann mittels eines Deckels 23 verschlossen werden. Dazu ist an dem Deckel 23 ein Innengewinde 24 ausgebildet, mit dem der Deckel 23 auf einen Gewindestutzen 25 der Verschlusswandung 19, der seinerseits ein Außengewinde 26 aufweist, an der oberen Außenseite 20 der Verschlusswandung 19 aufgeschraubt werden kann. An seiner in Gebrauchsstellung dem Antrieb 5 zugewandten Unterseite 27 weist das Behältnis 2 vier gleichmäßig um die Rotationsachse R verteilt angeordnete Standfüße 28 auf. Die Standfüße 28 an der Unterseite 27 des Behältnisses 2 umgeben dabei eine Bajonettkupplung 29, mittels derer die Rühr- oder Dispergiervorrichtung 1 an einer den Antrieb 5 aufweisenden Antriebseinheit 30 fixierbar ist.

Dabei ist die Schnittstelle 21 für die Handhabungseinheit an der dem Boden 7 abgewandten Außenseite 20 der Verschlusswandung 19 des Behältnis 2 in einer definierten Ausrichtung sowohl zu den vier Standfüßen 28 als auch zu der Bajonettkupplung 29 angeordnet. Wie insbesondere Figur 1 zeigt, weist die Schnittstelle 21 zwei sich gegenüberliegend angeordnete Eingriffe 31 auf, in die Greifelemente einer Handhabungseinheit eingeführt werden können, um die Rühr- oder Dispergiervorrichtung 1 zu ergreifen. Über die Ausrichtung der Schnittstelle 21 und ihrer Eingriffe 31 relativ zu den Standfüßen 28 und der Bajonettkupplung 29 ist eindeutig definiert und sozusagen codiert, wie die von einer Handhabungseinheit ergriffene Rühr- oder Dispergiervorrichtung 1 relativ zu der Antriebseinheit 30 und einer passend zu der Bajonettkupplung 29 ausgebildeten Kupplungsschnittstelle ausgerichtet werden muss, um die Rühr- oder Dispergiervorrichtung 1 automatisiert auf die Antriebseinheit 30 aufzusetzen und mit dieser zu verbinden.

Das Übertragungselement 6 ist im in den Figuren dargestellten Ausführungsbeispiel der Rühr- oder Dispergiervorrichtung 1 ein von einer Membran 32 gehaltenes, stabförmiges Element 33. Die Membran 32 bildet einen unteren Teil einer Innenwandung des Behältnisses 2, im vorliegenden Fall einen Teil des den Mischraum 3 nach unten hin abschließenden Bodens 7. Das stabförmige Element 33 wird mittels des Antriebs 5 in eine taumelnde Bewegung versetzt. Dies so, dass ein in den Mischraum 3 ragendes Stabende 34 eine taumelnde Bewegung ausführt. Das stabförmige Element 33 greift mit seinem Stabende 34 in eine Ausnehmung 35 des Rotors 4 ein und kann seine eigene taumelnde Bewegung auf den Rotor 4 übertragen, wodurch dieser in eine Drehung um die Rotationsachse 4 versetzt wird.

Figur 5 zeigt deutlich, dass die ersten Enden 13 der Strömungsbrecher 12 einen axialen Abstand zu der Kreisbahn 16 aufweisen und zudem oberhalb der Kreisbahn 16 angeordnet sind. Der Rotor 4 ist dabei axial zwischen dem Boden 7 des Mischraums 3 und den ersten Enden 13 der Strömungsbrecher 12 angeordnet. Zwischen den ersten Enden 13 und der Kreisbahn 16 ist somit ein Freiraum geschaffen, der ausreichend groß ist, um ein Verklemmen einer noch unzerkleinerten Kapsel oder Tablette zwischen dem Rotor 4 mit seinen Schneidvorsprüngen 8 und den ersten Enden 13 der Strömungsbrecher 12 zu vermeiden.

Zur Ausbildung einer stabilen Rückströmung der Flüssigkeit im Mischraum 3 des Behältnis 2 zurück zum Rotor 4 mit seinen Schneidvorsprüngen 8 ist ein radialer Abstand zwischen der Umlenkfläche 15 und der Rotationsachse R des Rotors 4 größer als ein radialer Abstand zwischen den ersten Enden 13 der Strömungsbrecher 12 und der Rotationsachse R des Rotors 4. Im Vergleich zu den ersten Enden 13 der Strömungsbrecher 12 ist die Umlenkfläche 15 somit zurückversetz angeordnet. So kann eine von dem Rotor 4 verursachte Strömung von der Umlenkfläche 14 und den Strömungsbrechern 12 zu dem Rotor 4 mit seinen Schneidvorsprüngen 8 zurücklenkt werden. Insgesamt begünstigt die in Figur 5 dargestellte Anordnung der Strömungsbrecher 12 und der Umlenkfläche 14 relativ zu dem Rotor 4 mit seinen entlang der Kreisbahn 16 umlaufenden Schneidvorsprüngen die Ausbildung einer energetisch optimierten Strömung in Form einer bis zum Rotor 4 reichenden Trombe.

Zusammen mit der Antriebseinheit 30, die den Antrieb 5 aufweist, bildet die Rühr- oder Dispergiervorrichtung 1 eine im Ganzen mit 36 bezeichnete Rühr- oder Dispergieranordnung. In Gebrauchsstellung ist die Rühr- oder Dispergiervorrichtung 1 mit dem Antrieb 5 zur Übertragung eines Antriebdrehmoments von dem Antrieb 5 über das Übertragungselement 6 auf den Rotor 4 gekoppelt.

Zur optimierten Verarbeitung von Rühr- oder Dispergiergut, insbesondere von Tabletten und/oder Medikamentenkapseln, werden die Rühr- oder Dispergiervorrichtung 1 sowie die Rühr- oder Dispergieranordnung 36 mit einer derartigen Vorrichtung vorgeschlagen. Dabei ist vorgesehen, dass die Rühr- oder Dispergiervorrichtung 1 in ihrem Mischraum 3 einen motorisch angetriebenen Rotor 4 aufweist, der wenigstens einen von dem Boden 7 des Mischraums 3 nach oben abgewinkelten oder abgebogenen Schneidvorsprung 8 mit zumindest einer Schneide 10 aufweist. An der die Rotationsachse R umgebenden Innenumfangswandung 11 des Mischraums 3 ist ferner wenigstens ein Strömungsbrecher 12 derart vorgesehen, dass dieser einen sich von seinem ersten, dem Boden 7 zugewandten Ende 12 hin zu seinem zweiten, dem ersten Ende 12 gegenüberliegendem Ende 13 verjüngenden Verlauf hat. Ferner ist zwischen der Innenumfangswandung 11 und dem Boden 7 des Mischraums 3 die Umlenkfläche 15 zum Umlenken von zu verarbeitendem Rühr- oder Dispergiergut und/oder Flüssigkeit in Richtung des Rotors 4 vorgesehen. Der wenigstens eine Strömungsbrecher 12 ist dabei sowohl zu dem Boden 7 des Mischraums 3 als auch zu dem wenigstens einem Schneidvorsprung 8 und zu der Kreisbahn 16, auf der der wenigstens eine Schneidvorsprung 8 um die Rotationsachse R bewegbar ist, beabstandet.

### Bezugszeichenliste

- 1: Rühr- oder Dispergiervorrichtung
- 2: Behältnis
- 3: Mischraum
- 4: Rotor
- 5: Antrieb
- 6: Übertragungselement
- 7: Boden
- 8: Schneidvorsprung
- 9: Arm
- 10: Schneide
- 11: Innenumfangswandung
- 12: Strömungsbrecher
- 13: erstes Ende von 12
- 14: zweites Ende von 12
- 15: Umlenkfläche
- 16: Kreisbahn
- 17: Steg
- 18: Ring
- 19: Verschlusswandung
- 20: Außenseite
- 21: Schnittstelle
- 22: Einfüllöffnung
- 23: Deckel
- 24: Innengewinde
- 25: Gewindestutzen
- 26: Außengewinde
- 27: Unterseite von 2
- 28: Standfuß
- 29: Bajonettkupplung
- 30: Antriebseinheit
- 31: Eingriffe von 21
- 32: Membran
- 33: stabförmiges Element
- 34: Stabende
- 35: Ausnehmung in 4
- 36: Rühr- oder Dispergieranordnung
- R: Rotationsachse

## Patentansprüche

1. Rühr- oder Dispergiervorrichtung (1), insbesondere eingerichtet zum Zerkleinern von Tabletten und/oder Medikamentenkapseln und zum Lösen der zerkleinerten Tabletten und/oder Medikamentenkapseln in einer Flüssigkeit, mit einem einen Mischraum (3) aufweisenden Behältnis (2), mit einem in dem Mischraum (3) um eine Rotationsachse (R) antreibbaren Rotor (4) und mit einem mit einem Antrieb (5) koppelbaren oder gekoppelten Übertragungselement (6) zur Übertragung eines Antriebsdrehmoments von dem Antrieb (5) auf den Rotor (4), wobei der Rotor (4) wenigstens einen von einem Boden (7) des Mischraums (3) weg gerichteten, zu der Rotationsachse (R) hin abgewinkelten Schneidvorsprung (8) mit zumindest einer Schneide (10) aufweist, wobei an einer die Rotationsachse (R) umgebenden Innenumfangswandung (11) des Mischraums (3) wenigstens ein Strömungsbrecher (12) derart vorgesehen ist, dass ein Abstand eines ersten, dem Boden (7) zugewandten Endes (13) des Strömungsbrechers (12) zu der Rotationsachse (R) kleiner als ein Abstand eines zweiten, dem ersten Ende (13) abgewandten Endes (14) des Strömungsbrechers (12) zu der Rotationsachse (R) ist, wobei zwischen der Innenumfangswandung (11) und dem Boden (7) des Mischraums (3) eine Umlenkfläche (15) zum Umlenken von zu verarbeitendem Rühr- oder Dispergiergut und/oder Flüssigkeit in Richtung des Rotors (4) und des wenigstens einen Schneidvorsprungs (8) ausgebildet ist, wobei die Umlenkfläche (15) einen zum Boden (7) und zu der Innenumfangswandung (11) schrägen Verlauf aufweist, und wobei das erste Ende (13) des wenigstens einen Strömungsbrechers (12) zu dem Boden (7) des Mischraums (3) und zu einer Kreisbahn (16), auf der der wenigstens eine Schneidvorsprung (8) bewegbar ist, beabstandet ist, **dadurch gekennzeichnet, dass** der wenigstens eine Strömungsbrecher (12) eine sich von dem ersten Ende (13) zu dem zweiten Ende (14) hin verjüngende Geometrie hat und dass das erste Ende (13) des wenigstens einen Strömungsbrechers (12) oberhalb der Kreisbahn (16) angeordnet ist.

2. Rühr- oder Dispergiervorrichtung (1) nach Anspruch 1, **dadurch gekennzeichnet, dass** der Rotor (4) zwei, drei oder vier oder mehr Schneidvorsprünge (8) aufweist, vorzugsweis wobei die Schneidvorsprünge (8) jeweils an einem Arm (9) des Rotors (4) angeordnet und/oder, insbesondere unterschiedlich, zur Rotationsachse (R) des Rotors (4) beabstandet sind.

3. Rühr- oder Dispergiervorrichtung (1) nach Anspruch 1 oder 2, **dadurch gekennzeichnet, dass** die Rühr- oder Dispergiervorrichtung zwei, drei oder vier oder mehr, vorzugsweise gleichmäßig um die Rotationsachse (R) verteilt angeordnete, Strömungsbrecher (12) aufweist und/oder dass der wenigstens eine Strömungsbrecher (12) ein in den Mischraum (3) ragender, in Richtung der Rotationsachse (R) verlaufender Steg (17) ist, vorzugsweise wobei der Steg (17) einen rechteckigen oder zumindest bereichsweise runden Querschnitt aufweist, und/oder dass der wenigstens eine Strömungsbrecher (12) eine sich von dem ersten Ende (13) zu dem zweiten Ende (14) hin konisch verjüngende Geometrie hat.

4. Rühr- oder Dispergiervorrichtung (1) nach einem der Ansprüche 1 bis 3, **dadurch gekennzeichnet, dass** das erste Ende (13) des wenigstens einen Strömungsbrechers (12), insbesondere entlang eines Radius, gebogen ist und/oder dass der wenigstens eine Strömungsbrecher (12) mit der Innenumfangswandung (11) des Mischraums (3) eine stofflich homogene, monolithische Einheit bildet.

5. Rühr- oder Dispergiervorrichtung (1) nach einem der vorhergehenden Ansprüche, **dadurch gekennzeichnet, dass** der wenigstens eine Schneidvorsprung (8) in einem Winkel zwischen 0 Grad und 90 Grad, vorzugsweise parallel oder in einem Winkel von 5 Grad, zu der Rotationsachse (R) ausgerichtet ist oder in einem Winkel zwischen 0 Grad und 90 Grad, insbesondere in einem Winkel von 85 Grad, zu einer rechtwinklig zu der Rotationsachse (R) orientierten Querschnittsebene und/oder zu dem Boden (7) ausgerichtet ist und/oder dass die zumindest eine Schneide (10) quer oder rechtwinklig zu der Rotationsachse (R) ausgerichtet ist.

6. Rühr- oder Dispergiervorrichtung (1) nach einem der vorhergehenden Ansprüche, **dadurch gekennzeichnet, dass** die Umlenkfläche (15) zwischen der Innenumfangswandung (11) und dem Boden (7) des Mischraums (3) einen, insbesondere entlang eines Radius über einen bestimmten Winkelbereich, gebogenen Verlauf aufweist und/oder einen um die Rotationsachse (R) geschlossenen, unterbrechungsfreien Ring bildet.

7. Rühr- oder Dispergiervorrichtung (1) nach einem der vorhergehenden Ansprüche, **dadurch gekennzeichnet, dass** ein minimaler axialer Abstand des wenigstens einen Strömungsbrechers (12) zu dem Boden (7) des Mischraums (3) und/oder ein minimaler Abstand des wenigstens einen Strömungsbrechers (12) zu der Kreisbahn (16) der wenigstens Schneide (10) wenigstens so groß wie eine größte Abmessung mit der Rühr- oder Dispergiervorrichtung (1) zu verarbeitender Partikel, insbesondere von Tabletten und/oder Medikamentenkapseln, ist.

8. Rühr- oder Dispergiervorrichtung (1) nach einem der vorhergehenden Ansprüche, **dadurch gekennzeichnet, dass** ein minimaler axialer Abstand des wenigstens einen Strömungsbrechers (12) zu dem Boden (7) des Mischraums (3) wenigstens einem Fünftel, einem Viertel, einem Drittel, der Hälfte, zwei Dritteln, drei Vierteln, neun Zehnteln eines Radius des Rotors (4) oder wenigstens der Länge des Radius des Rotors (4) entspricht oder größer als der Radius und kleiner als der Durchmesser des Rotors (4) ist und/oder dass ein minimaler Abstand des wenigstens einen Strömungsbrechers (12) zu dem wenigstens einen Schneidvorsprung (8) wenigstens einem Fünftel, einem Viertel, einem Drittel, der Hälfte, zwei Dritteln, drei Vierteln, neun Zehnteln des Radius des Rotors (4) oder wenigstens der Länge des Radius des Rotors (4) entspricht oder größer als der Radius und kleiner als der Durchmesser des Rotors (4) ist und/oder dass ein minimaler Abstand des wenigstens einen Strömungsbrechers (12) zu der Kreisbahn (16) des wenigstens einen Schneidvorsprungs (8) wenigstens einem Fünftel, einem Viertel, einem Drittel, der Hälfte, zwei Dritteln, drei Vierteln, neun Zehnteln des Radius des Rotors (4) oder wenigstens der Länge des Radius des Rotors (4) entspricht oder größer als der Radius und kleiner als der Durchmesser des Rotors (4) ist.

9. Rühr- oder Dispergiervorrichtung (1) nach einem der vorhergehenden Ansprüche, **dadurch gekennzeichnet, dass** das Behältnis (2) eine dem Boden (7) des Mischraums (3) gegenüberliegende Verschlusswandung (19) aufweist, an deren dem Mischraum (3) abgewandten Außenseite (20) eine Schnittstelle (21) für eine Handhabungseinheit vorgesehen ist.

10. Rühr- oder Dispergiervorrichtung (1) nach einem der vorhergehenden Ansprüche, **dadurch gekennzeichnet, dass** das Behältnis (2) an einer oder der dem Boden (7) des Mischraums (3) gegenüberliegenden Verschlusswandung (19) eine Einfüllöffnung (22) in den Mischraum (3) aufweist, insbesondere der ein Deckel (23) zugeordnet ist, mit dem die Einfüllöffnung (22) verschließbar ist.

11. Rühr- oder Dispergiervorrichtung (1) nach einem der vorhergehenden Ansprüche, **dadurch gekennzeichnet, dass** das Behältnis (2) an seiner in Gebrauchsstellung einem Antrieb (5) zugewandten Unterseite (27) wenigstens einen Standfuß (28) aufweist und/oder dass das Behältnis (2) an seiner einem Antrieb (5) in Gebrauchsstellung zugewandten Unterseite (27) eine Bajonettkupplung (29) aufweist, insbesondere wobei eine oder die Schnittstelle (21) für eine Handhabungseinheit an einer oder der dem Boden (7) abgewandten Außenseite (20) einer oder der Verschlusswandung (19) des Behältnis (2) in einer definierten Ausrichtung zu dem wenigstens einen Standfuß (28) und/oder der Bajonettkupplung (29) angeordnet ist.

12. Rühr- oder Dispergiervorrichtung (1) nach einem der vorhergehenden Ansprüche, **dadurch gekennzeichnet, dass** das Übertragungselement (6) ein von einer Membran (32), die zumindest einen Teil einer Innenwandung des Behältnisses (2) bildet, gehaltenes, stabförmiges Element (33) ist, das mittels eines Antriebs (5) in eine taumelnde Bewegung versetzbar ist, sodass ein in den Mischraum (3) ragendes Stabende (34) eine taumelnde Bewegung ausführt, wobei das stabförmige Element (33), insbesondere mit seinem Stabende (34), zum Antreiben des Rotors (4) in eine Ausnehmung (35) des Rotors (4) eingreift, oder dass das Übertragungselement (6) eine durch eine Drehdurchführung in den Mischraum (3) geführte, mittels eines Antriebs (5) antreibbare Antriebwelle ist, mit der der Rotor (4) drehfest verbunden ist.

13. Rühr- oder Dispergiervorrichtung (1) nach einem der vorhergehenden Ansprüche, **dadurch gekennzeichnet, dass** das erste Ende (13) des wenigstens einen Strömungsbrechers (12) einen axialen Abstand zu der Kreisbahn (16) aufweist, und/oder dass der Rotor (4) zwischen dem Boden (7) des Mischraums (3) und dem ersten Ende (13) des wenigstens einen Strömungsbrechers (12) angeordnet ist.

14. Rühr- oder Dispergiervorrichtung (1) nach einem der vorhergehenden Ansprüche, **dadurch gekennzeichnet, dass** ein, insbesondere radialer, Abstand zwischen der Umlenkfläche (15) und der Rotationsachse (R) des Rotors (4) größer als ein, insbesondere radialer, Abstand zwischen dem ersten Ende (13) des wenigstens einen Strömungsbrechers (12) und der Rotationsachse (R) des Rotors (4) ist.

15. Rühr- oder Dispergieranordnung (36) mit einer einen Antrieb (5) aufweisenden Antriebseinheit (30) und mit wenigstens einer mit dem Antrieb (5) koppelbaren oder gekoppelten Rühr- oder Dispergiervorrichtung (1) nach einem der vorhergehenden Ansprüche.

## Claims

1. Mixing or dispersing device (1), in particular specified for comminuting tablets and/or medicament capsules and for dissolving the comminuted tablets and/or medicament capsules in a liquid, having a vessel (2) that has a mixing space (3), having a rotor (4) that in the mixing space (3) is drivable about a rotation axis (R), and having a transmission element (6) that is capable of being coupled or is coupled to a drive (5), for transmitting a drive torque from the drive (5) to the rotor (4), wherein the rotor (4) has at least one cutting protrusion (8) which is directed away from a base (7) of the mixing space (3) and angled towards the rotation axis (R) and has at least one blade (10), wherein at least one flow breaker (12) is provided on an internal circumferential wall (11) of the mixing space (3) that surrounds the rotation axis (R) in such a manner that a spacing of a first end (13) of the flow breaker (12) that faces the base (7) from the rotation axis (R) is smaller than a spacing of a second end (14) of the flow breaker (12) that faces away from the first end (13) from the rotation axis (R), wherein a deflection face (15) for deflecting mixing or dispersing material to be processed and/or liquids in the direction of the rotor (4) and of the at least one cutting protrusion (8) is configured between the internal circumferential wall (11) and the base (7) of the mixing space (3), wherein the deflection face (15) has a profile that is oblique in relation to the base (7) and to the internal circumferential wall (11), and wherein the first end (13) of the at least one flow breaker (12) is spaced apart from the base (7) of the mixing space (3) and from a circular path (16) on which the at least one cutting protrusion (8) is movable, **characterized in that** the at least one flow breaker (12) has a geometry which tapers from the first end (13) towards the second end (14), and **in that** the first end (13) of the at least one flow breaker (12) is disposed above the circular path (16).

2. Mixing or dispersing device (1) according to Claim 1, **characterized in that** the rotor (4) has two, three, or four, or more cutting protrusions (8), wherein the cutting protrusions (8) are preferably in each case disposed on an arm (9) of the rotor (4) and/or are, in particular dissimilarly, spaced apart from the rotation axis (R) of the rotor (4).

3. Mixing or dispersing device (1) according to Claim 1 or 2, **characterized in that** the mixing or dispersing device has two, three, or four, or more flow breakers (12) that are disposed so as to be preferably uniformly distributed about the rotation axis (R), and/or **in that** the at least one flow breaker (12) is a web (17) which protrudes into the mixing space (3) and runs in the direction of the rotation axis (R), wherein the web (17) preferably has a rectangular, or at least in portions round, cross section, and/or **in that** the at least one flow breaker (12) has a geometry which tapers in a conical manner from the first end (13) towards the second end (14) .

4. Mixing or dispersing device (1) according to one of Claims 1 to 3, **characterized in that** the first end (13) of the at least one flow breaker (12) is bent, in particular along a radius, and/or **in that** the at least one flow breaker (12) conjointly with the internal circumferential wall (11) of the mixing space (3) forms a materially homogenous, monolithic unit.

5. Mixing or dispersing device (1) according to one of the preceding claims, **characterized in that** the at least one cutting protrusion (8) in relation to the rotation axis (R) is aligned at an angle between 0 degrees and 90 degrees, preferably so as to be parallel or at an angle of 5 degrees, or in relation to a cross-sectional plane that is oriented so as to be orthogonal to the rotation axis (R) and/or in relation to the base (7) is aligned at an angle between 0 degrees and 90 degrees, in particular at an angle of 85 degrees, and/or **in that** the at least one blade (10) in relation to the rotation axis (R) is aligned so as to be transverse or orthogonal.

6. Mixing or dispersing device (1) according to one of the preceding claims, **characterized in that** the deflection face (15) between the internal circumferential wall (11) and the base (7) of the mixing space (3) has a profile that is bent in particular along a radius across a specific angular range, and/or forms a closed uninterrupted ring about the rotation axis (R).

7. Mixing or dispersing device (1) according to one of the preceding claims, **characterized in that** a minimum axial spacing of the at least one flow breaker (12) from the base (7) of the mixing space (3), and/or a minimum spacing of the at least one flow breaker (12) from the circular path (16) of the at least one blade (10) is at least as large as a maximum dimension of particles, in particular of tablets and/or medicament capsules, that are to be processed by the mixing or dispersing device (1) .

8. Mixing or dispersing device (1) according to one of the preceding claims, **characterized in that** a minimum axial spacing of the at least one flow breaker (12) from the base (7) of the mixing space (3) corresponds to at least one fifth, one fourth, one third, half, two thirds, three quarters, nine tenths of a radius of the rotor (4) or to at least the length of the radius of the rotor (4), or is larger than the radius and smaller than the diameter of the rotor (4), and/or **in that** a minimum spacing of the at least one flow breaker (12) from the at least one cutting protrusion (8) corresponds to at least one fifth, one quarter, one third, half, two thirds, three quarters, nine tenths of the radius of the rotor (4) or to at least the length of the radius of the rotor (4), or is larger than the radius and smaller than the diameter of the rotor (4), and/or **in that** a minimum spacing of the at least one flow breaker (12) from the circular path (16) of the at least one cutting protrusion (8) corresponds to at least one fifth, one quarter, one third, half, two thirds, three quarters, nine tenths of the radius of the rotor (4) or to at least the length of the radius of the rotor (4), or is larger than the radius and smaller than the diameter of the rotor (4).

9. Mixing or dispersing device (1) according to one of the preceding claims, **characterized in that** the vessel (2) has a closure wall (19) that is opposite the base (7) of the mixing space (3), an interface (21) for a handling unit being provided on the external side (20) of said closure wall (19) that faces away from the mixing space (3) .

10. Mixing or dispersing device (1) according to one of the preceding claims, **characterized in that** the vessel (2) on a or the closure wall (19) that is opposite the base (7) of the mixing space (3) has a filler opening (22) into the mixing space (3), a lid (23) by way of which the filler opening (22) is closable being in particular assigned to said filler opening (22).

11. Mixing or dispersing device (1) according to one of the preceding claims, **characterized in that** the vessel (2) on the lower side (27) thereof that in the use position faces a drive (5) has at least one support foot (28), and/or **in that** the vessel (2) on the lower side (27) thereof that in the use position faces a drive (5) has a bayonet coupling (29), wherein a or the interface (21) for a handling unit is in particular disposed on a or the external side (20) of a or the closure wall (19) of the vessel (2) that faces away from the base (7), so as to be in a defined alignment in relation to the at least one support foot (28) and/or the bayonet coupling (29) .

12. Mixing or dispersing device (1) according to one of the preceding claims, **characterized in that** the transmission element (6) is a rod-shaped element (33) which is held by a diaphragm (32) forming at least part of an internal wall of the vessel (2) and which by means of a drive (5) can be set in a gyrating motion such that a rod end (34) that protrudes into the mixing space (3) performs a gyrating motion, wherein the rod-shaped element (33), in particular by way of the rod end (34) thereof, for driving the rotor (4) engages in a clearance (35) of the rotor (4), or **in that** the transmission element (6) is a drive shaft which is drivable by means of a drive (5) and which is routed through a rotary leadthrough into the mixing space (3), the rotor (4) being connected to said drive shaft in a rotationally fixed manner.

13. Mixing or dispersing device (1) according to one of the preceding claims, **characterized in that** the first end (13) of the at least one flow breaker (12) has an axial spacing from the circular path (16), and/or **in that** the rotor (4) is disposed between the base (7) of the mixing space (3) and the first end (13) of the at least one flow breaker (12).

14. Mixing or dispersing device (1) according to one of the preceding claims, **characterized in that** an in particular radial spacing between the deflection face (15) and the rotation axis (R) of the rotor (4) is larger than an in particular radial spacing between the first end (13) of the at least one flow breaker (12) and the rotation axis (R) of the rotor (4).

15. Mixing or dispersing assembly (36) having a drive unit (30) that has a drive (5), and having at least one mixing or dispersing device (1) according to one of the preceding claims that is capable of being coupled or is coupled to the drive (5).

## Revendications

1. Dispositif de malaxage ou de dispersion (1), configuré en particulier pour broyer des comprimés et/ou des gélules médicamenteuses et pour dissoudre les comprimés et/ou les gélules médicamenteuses broyés dans un liquide, avec un récipient (2) présentant une chambre de mélange (3), avec un rotor (4) pouvant être entraîné autour d'un axe de rotation (R) et avec un élément de transmission (6) couplé ou pouvant être couplé avec un moteur (5) pour transmettre un couple de rotation moteur du moteur (5) au rotor (4), dans lequel le rotor (4) présente au moins une saillie de coupe (8) avec au moins un tranchant (10) tournant le dos à un fond (7) de la chambre de mélange (3) et coudée vers l'axe de rotation (R), dans lequel il est prévu sur une paroi périphérique intérieure (11) de la chambre de mélange (3) entourant l'axe de rotation (R) au moins un brise-flux (12), de telle sorte qu'une distance par rapport à l'axe de rotation (R) d'une première extrémité (13) du brise-flux (12) située du côté du fond (7) est inférieure à une distance par rapport à l'axe de rotation (R) d'une deuxième extrémité (14) du brise-flux opposée à la première extrémité (13), dans lequel entre la paroi périphérique intérieure (11) et le fond (7) de la chambre de mélange est formée une surface de déviation (15) pour dévier la matière à malaxer ou à disperser et/ou le liquide en direction du rotor (4) et de l'au moins une saillie de coupe (8), dans lequel la surface de déviation (15) présente un tracé incliné par rapport au fond (7) et par rapport à la paroi périphérique intérieure (11), et dans lequel la première extrémité (13) de l'au moins un brise-flux (12) est espacée du fond (7) de la chambre de mélange (3) et d'une voie circulaire (16) sur laquelle l'au moins une saillie de coupe (8) peut se déplacer, **caractérisé en ce que** l'au moins un brise-flux (12) a une géométrie se rétrécissant de la première extrémité (13) vers la deuxième extrémité (14) et que la première extrémité (13) de l'au moins un brise-flux (12) est située au-dessus de la voie circulaire (16).

2. Dispositif de malaxage ou de dispersion (1) selon la revendication 1, **caractérisé en ce que** le rotor (4) présente deux, trois ou quatre saillies de coupe (8), voire davantage, les saillies de coupe (4) étant de préférence disposées chacune sur un bras (9) du rotor (4) et/ou espacées, en particulier de façon différente, de l'axe de rotation (R) du rotor (4).

3. Dispositif de malaxage ou de dispersion (1) selon la revendication 1 ou 2, **caractérisé en ce que** le dispositif de malaxage ou de dispersion possède deux, trois ou quatre brise-flux (12), voire davantage, de préférence répartis régulièrement autour de l'axe de rotation (R) et/ou que l'au moins un brise-flux (12) est une barrette (17) saillant dans la chambre de mélange (3) et courant dans la direction de l'axe de rotation (R), la barrette (17) possédant une section transversale parallélépipédique ou au moins partiellement ronde, et/ou que l'au moins un brise-flux (12) a une géométrie conique se rétrécissant de la première extrémité (13) vers la deuxième extrémité (14).

4. Dispositif de malaxage ou de dispersion (1) selon une des revendications 1 à 3, **caractérisé en ce que** la première extrémité (13) de l'au moins un brise-flux (12) est courbée, en particulier le long d'un rayon, et/ou que l'au moins un brise-flux (12) forme avec la paroi périphérique intérieure (11) de la chambre de mélange (3) une unité monolithique matériellement homogène.

5. Dispositif de malaxage ou de dispersion (1) selon une des revendications précédentes, **caractérisé en ce que** l'au moins une saillie de coupe (8) est orientée selon un angle de 0 degré à 90 degrés, de préférence parallèlement ou selon un angle de 5 degrés, par rapport à l'axe de rotation (R) ou est orientée selon un angle de 0 degré à 90 degrés, de préférence selon un angle de 85 degrés, par rapport à un plan transversal orienté perpendiculairement à l'axe de rotation (R) et/ou par rapport au fond (7) et/ou que l'au moins un tranchant (10) est orienté transversalement ou perpendiculairement à l'axe de rotation (R).

6. Dispositif de malaxage ou de dispersion (1) selon une des revendications précédentes, **caractérisé en ce que** la surface de déviation (15) présente entre la paroi périphérique intérieure (11) et le fond (7) de la chambre de mélange (3) un tracé incliné, en particulier sur une plage angulaire définie le long d'un rayon, et/ou forme un anneau fermé ininterrompu autour de l'axe de rotation (R).

7. Dispositif de malaxage ou de dispersion (1) selon une des revendications précédentes, **caractérisé en ce qu'**une distance axiale minimale de l'au moins un brise-flux (12) par rapport au fond (7) de la chambre de mélange (3) et/ou une distance minimale de l'au moins un brise-flux (12) par rapport à la voie circulaire (16) de l'au moins un tranchant (10) est au moins égale à une dimension maximale des particules à traiter avec le dispositif de malaxage ou de dispersion (1), en particulier des comprimés et/ou des gélules médicamenteuses.

8. Dispositif de malaxage ou de dispersion (1) selon une des revendications précédentes, **caractérisé en ce qu'**une distance axiale minimale de l'au moins un brise-flux (12) par rapport au fond (7) de la chambre de mélange (3) correspond au moins à un cinquième, un quart, un tiers, la moitié, deux tiers, trois quarts ou neuf dixièmes d'un rayon du rotor (4) ou au moins à la longueur du rayon du rotor (4) ou est supérieure au rayon et inférieure au diamètre du rotor (4) et/ou qu'une distance minimale de l'au moins un brise-flux (12) par rapport à l'au moins une saillie de coupe (8) correspond au moins à un cinquième, un quart, un tiers, la moitié, deux tiers, trois quarts ou neuf dixièmes d'un rayon du rotor (4) ou au moins à la longueur du rayon du rotor (4) ou est supérieure au rayon et inférieure au diamètre du rotor (4) et/ou qu'une distance minimale de l'au moins un brise-flux (12) par rapport à la voie circulaire (16) de l'au moins saillie de coupe correspond au moins à un cinquième, un quart, un tiers, la moitié, deux tiers, trois quarts ou neuf dixièmes d'un rayon du rotor (4) ou au moins à la longueur du rayon du rotor (4) ou est supérieure au rayon et inférieure au diamètre du rotor (4).

9. Dispositif de malaxage ou de dispersion (1) selon une des revendications précédentes, **caractérisé en ce que** le récipient (2) présente une paroi de fermeture (19) opposée au fond (7) de la chambre de mélange (3) sur la face extérieure (20) opposée à la chambre de mélange (3) duquel est prévue une interface (21) pour une unité de manipulation.

10. Dispositif de malaxage ou de dispersion (1) selon une des revendications précédentes, **caractérisé en ce que** le récipient (2) présente au niveau d'une ou de la paroi de fermeture (19) opposée au fond (7) de la chambre de mélange (3) une ouverture de remplissage (22) dans la chambre de mélange (3), à laquelle est en particulier associé un couvercle (23) avec lequel l'ouverture de remplissage (22) peut être fermée.

11. Dispositif de malaxage ou de dispersion (1) selon une des revendications précédentes, **caractérisé en ce que** le récipient (2) présente au niveau de sa face inférieure (27) orientée vers un moteur (5) en position d'utilisation au moins un pied de support (28) et/ou que le récipient (2) présente au niveau de sa face inférieure (27) orientée vers un moteur (5) en position d'utilisation un raccord à baïonnette (29), une ou l'interface (21) d'une unité de manipulation étant en particulier disposée au niveau d'une ou de la face extérieure (20) opposée au fond (7) d'une ou de la paroi de fermeture (19) du récipient (2) dans une direction définie par rapport à l'au moins un pied de support (28) et/ou au raccord à baïonnette (29).

12. Dispositif de malaxage ou de dispersion (1) selon une des revendications précédentes, **caractérisé en ce que** l'élément de transmission (6) est un élément en forme de tige (33) maintenu par une membrane (32) qui forme au moins une partie d'une paroi intérieure du récipient (2), qui être déplacé au moyen d'un moteur (5) dans un mouvement de balancement, de sorte qu'une extrémité de tige (34) dépassant dans la chambre de mélange (3) exécute un mouvement de balancement, l'élément en forme de tige (33) pénétrant, en particulier avec son extrémité de tige (34), dans une cavité (35) du rotor (4) pour entraîner le rotor (4), ou que l'élément de transmission (6) est un arbre d'entraînement guidé à travers un passage rotatif dans la chambre de mélange (3), pouvant être entraîné au moyen d'un moteur (5), avec lequel le rotor (4) est relié solidairement en rotation.

13. Dispositif de malaxage ou de dispersion (1) selon une des revendications précédentes, **caractérisé en ce que** la première extrémité (13) de l'au moins un brise-flux (12) présente une distance axiale par rapport à la voie circulaire (16) et/ou que le rotor (4) est disposé entre le fond (7) de la chambre de mélange (3) et la première extrémité (13) de l'au moins un brise-flux (12).

14. Dispositif de malaxage ou de dispersion (1) selon une des revendications précédentes, **caractérisé en ce qu'**une distance, notamment radiale, entre la surface de déviation (15) et l'axe de rotation (R) du rotor (4) est supérieure à une distance, notamment radiale, entre la première extrémité (13) de l'au moins un brise-flux (12) et l'axe de rotation (R) du rotor (4).

15. Installation de malaxage ou de dispersion (36) avec une unité motrice (30) possédant un moteur (5) et avec au moins un dispositif de malaxage ou de dispersion (1) selon une des revendications précédentes couplé ou pouvant être couplé avec le moteur (5).
